# EUROPÄISCHE PATENTANMELDUNG

(11) **EP 4 371 693 A1**
(43) Veröffentlichungstag der Anmeldung: **22.05.2024**
(21) Anmeldenummer: 22208246.3
(22) Anmeldetag: 18.11.2022
(51) Int. Cl.: B23K 26/08, B23K 26/22, B23K 37/047, B23K 37/02, B23K 37/04, H01M 50/566, H01M 50/516, B23K 31/12, B23K 26/03, B23K 101/36

(54) **VERFAHREN ZUM LASERSCHWEISSEN EINER VIELZAHL VON BAUGRUPPEN**

(71) Anmelder: Bergmann & Steffen GmbH, 32139 Spenge (DE)
(72) Erfinder: Bergmann, Uwe, 49326 Melle (DE)
(74) Vertreter: Ter Meer Steinmeister & Partner

(57) **Zusammenfassung**

Verfahren zum Schweißen von Werkstücken, die eine Vielzahl von in mindestens einer Reihe angeordneten Baugruppen (C11-C29) bilden, bei dem die Werkstücke Baugruppe für Baugruppe der Reihe nach mittels zweier schrittweise bewegter, im Gegentakt arbeitender Spannrahmen (30, 32) miteinander verspannt und mittels einer lenkbaren Laserstrahlquelle (48) miteinander verschweißt werden, dadurch gekennzeichnet, dass die Laserstrahlquelle (48) synchron mit dem Spannrahmen (30, 32) aber kontinuierlich längs der mindestens einen Reihe der Baugruppen bewegt wird.

## Beschreibung

Die Erfindung betrifft ein Verfahren zum Schweißen von Werkstücken, die eine Vielzahl von in mindestens einer Reihe angeordneten Baugruppen bilden, bei dem die Werkstücke Baugruppe für Baugruppe der Reihe nach mit Hilfe von mindestens zwei schrittweise bewegten, im Wechsel arbeitenden Spannrahmen miteinander verspannt und mittels einer lenkbaren Laserstrahlquelle miteinander verschweißt werden.

Insbesondere befasst sich die Erfindung mit einem Verfahren zum Anschweißen von Kontaktblechen an zylindrische Batteriezellen in einem durch eine Vielzahl der Zellen gebildeten Batteriemodul.

Aus CN 108 77 2638A ist ein Verfahren dieser Art bekannt, bei dem die Laserstrahlquelle ortsfest über den Reihen der Batteriezelle angeordnet ist. Durch den Einsatz zweier im Gegentakt arbeitender Spannrahmen wird eine hohe Produktivität erreicht, da jeweils einer der Spannrahmen bereits in die nächste Position bewegt werden kann, während der andere Spannrahmen die Werkstücke hält, die gerade verschweißt werden. Nachteilig ist jedoch, dass bei den Batteriezellen, die sich an den Enden der Reihen befinden, der Laserstrahl unter einem relativ großen Einfallswinkel auftrifft, wodurch die Effizienz des Energieübertrags und die Qualität der Schweißnaht beeinträchtigt werden.

Aus der Praxis ist ein alternatives Verfahren bekannt, bei dem jeder Laserstrahlquelle nur ein einzelner Spannrahmen zugeordnet ist, der zusammen mit der Laserstrahlquelle schrittweise über die Reihe der Batteriezellen bewegt wird. Die Laserstrahlquelle lässt sich dann so anordnen, dass der Laserstrahl stets rechtwinklig auf die zu schweißenden Werkstücke auftrifft. Allerdings lässt sich bei diesem Verfahren eine hohe Produktivität nur durch den Einsatz mehrerer teurer Laserstrahlquellen erreichen. Ein weiterer Nachteil besteht darin, dass die Laserstrahlquelle bei der taktweisen Bewegung längs der Reihe der Batteriezellen in schnellem Wechsel beschleunigt und wieder angehalten werden muss, so dass die empfindliche Optik hohen Trägheitskräften ausgesetzt ist.

Aufgabe der Erfindung ist es, ein Verfahren anzugeben, das bei einer gegebenen Anzahl von Laserstrahlquellen eine hohe Produktivität sowie die Herstellung von Schweißnähten in hoher Qualität erlaubt.

Diese Aufgabe wird erfindungsgemäß dadurch gelöst, dass die Laserstrahlquelle synchron mit den Spanrahmen aber kontinuierlich längs der mindestens einen Reihe der Baugruppen bewegt wird.

Da die Laserstrahlquelle mit dem Spannrahmen mitbewegt wird, kann auch bei sehr langen Reihen von Baugruppen ein annähernd vertikaler Einfall des Laserstrahls über die gesamte Reihe der Baugruppen hinweg erreicht werden. Da die Laserstrahlquelle kontinuierlich bewegt wird, ist sie wesentlich geringeren mechanischen Beanspruchungen ausgesetzt. Zwar kommt es zu einer gewissen Relativbewegung zwischen der Laserstrahlquelle und den Spannrahmen, da die Spannrahmen taktweise vorrücken, jedoch kann diese Relativbewegung mit Hilfe der ohnehin vorhandenen lenkbaren Optik der Laserstrahlquelle ausgeglichen werden.

Vorteilhafte Ausgestaltungen des Verfahrens sind in den Unteransprüchen angegeben.

Die Spannrahmen können auf parallelen Reihen von Baugruppen arbeiten oder auch im überschlagenen Einsatz auf derselben Reihe.

Die nötigen Bewegungen der Spannrahmen können mittels mehrachsiger Roboter gesteuert werden. Beim Bearbeiten von zylindrischen Baugruppen wie beispielsweise Batteriezellen können die Spannrahmen auch um eine parallel zu den Zylinderachsen verlaufende Achse drehbar sein, so dass eine Anpassung an unterschiedliche Orientierungen der Schweißpunkte ermöglicht wird.

Die Bewegungen der Spannrahmen in der Richtung parallel zu den Achsen der zylindrischen Baugruppen können kraftabhängig so geregelt werden, dass die Werkstücke mit einer einstellbaren Spannkraft gegeneinander gepresst werden. Dadurch wird für jede Baugruppe individuell ein ausreichender Anpressdruck sichergestellt und zugleich eine mechanische Überbeanspruchung der Werkstücke vermieden. Wahlweise kann während der Antriebsbewegung eine Wegmessung vorgenommen werden. Auf diese Weise lässt sich prüfen, ob die Positionen der Werkstücke in der Richtung parallel zu den Zylinderachsen innerhalb vorgegebener Toleranzgrenzen liegen, und falls dies nicht der Fall ist, kann ein Fehlersignal ausgegeben werden.

Auf einem Wagen, mit dem die Laserstrahlquelle kontinuierlich bewegt wird, kann mindestens eine Kamera angeordnet sein, mit der die Lage der Werkstücke optisch erfasst werden kann, so dass auch bei gewissen Toleranzen in der Anordnung der Werkstücke eine korrekte Positionierung der Spannrahmen und eine zielgenaue Durchführung der Schweißungen möglich ist. Wenn der Wagen hin und hergehend bewegt wird, um nacheinander mehrere Reihen von Baugruppen zu bearbeiten, kann je eine Kamera auf der vorauslaufenden und der nachlaufenden Seite des Wagens angeordnet sein, so dass die optische Erfassung der Werkstücke und die nötige digitale Bildverarbeitung rechtzeitig vor dem jeweiligen Schweißvorgang stattfinden kann. Die jeweils nachlaufende Kamera kann dann beispielsweise für eine Qualitätskontrolle der Schweißnähte genutzt werden.

Eine Absaugvorrichtung zum Absaugen von Schweißgasen kann ebenfalls an dem Wagen angeordnet sein, der die Laserstrahlquelle trägt. Auch die Absaugvorrichtung ist dann nur geringen mechanischen Beanspruchungen ausgesetzt, da sie kontinuierlich bewegt wird. Analog kann an dem Wagen auch eine Begasungsvorrichtung zum Schweißen in einer Schutzgasatmosphäre vorgesehen sein.

Gegenstand der Erfindung ist auch eine Schweißvorrichtung, die zur Durchführung des oben beschriebenen Verfahrens ausgebildet ist.

Im folgenden wird ein Ausführungsbeispiel anhand der Zeichnung näher erläutert.

Es zeigen:
- Fig. 1 bis 4: schematische Seitenansichten einer erfindungsgemäßen Schweißvorrichtung in verschiedenen Betriebsstadien;
- Fig. 5 und 6: schematische Stirnansichten der Vorrichtung in verschiedenen Betriebsstadien;
- Fig. 7: zwei Reihen von Batteriezellen und zugehörige Elektrodenbleche in der Draufsicht, zusammen mit Teilen der Schweißvorrichtung;
- Fig. 8: einen Schnitt längs der Linie VIII-VIII in Fig. 7; und
- Fig. 9 bis 11: Ansichten analog zu Fig. 7 für verschiedene Betriebsstadien der Vorrichtung.

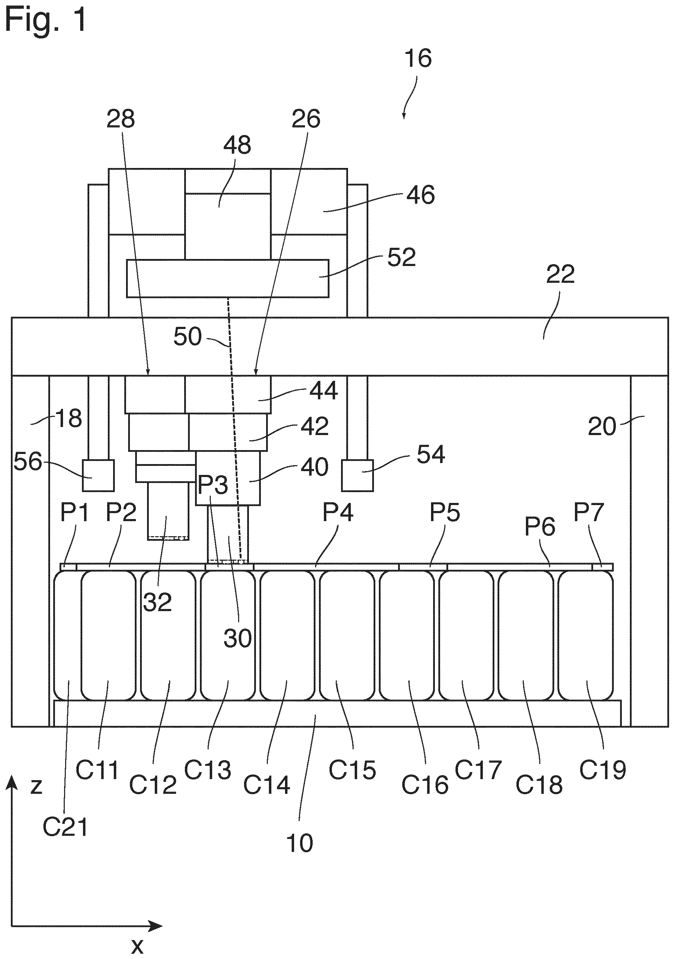

In Fig. 1 ist eine Reihe von im wesentlichen zylindrischen Baugruppen C11 bis C19 gezeigt, die aufrecht stehend auf einem ebenen Substrat 10 angeordnet sind. Bei dem Substrat 10 kann es sich um eine Plattform oder ein Tablett oder wahlweise auch um einen Förderer handeln, auf dem die Baugruppen in der Richtung senkrecht zur Zeichenebene in Fig. 1 an- und abtransportiert werden. Bei den Baugruppen C11 bis C19 handelt es sich in diesem Beispiel im Batteriezellen, die im folgenden kurz als Zellen C11 bis C19 bezeichnet werden sollen. Von einer zweiten Reihe von Batteriezellen, die sich hinter der Reihe der Zellen C11 bis C19 befindet, ist in Fig. 1 nur eine Zelle C21 am linken Ende der Reihe zu sehen. In den Bezugszeichen C11 ... C19, C21, ..., C29 identifiziert jeweils die erste Ziffer (1 oder 2) die Reihe, und die zweite Ziffer (1 bis 9) identifiziert die Position der Zelle in der Reihe.

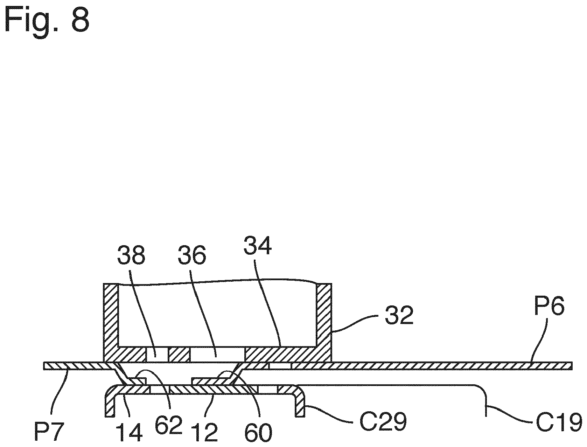

Obgleich dies in Fig. 1 nicht sichtbar ist, hat jede Batteriezelle an der Oberseite in der Mitte eine kreisförmige Elektrode, die einen Pluspol 12 bildet, und eine ringförmige, den Pluspol 12 mit Abstand umgebende Elektrode, die einen Minuspol 14 bildet und elektrisch von dem Pluspol 12 isoliert ist (siehe Fig. 8).

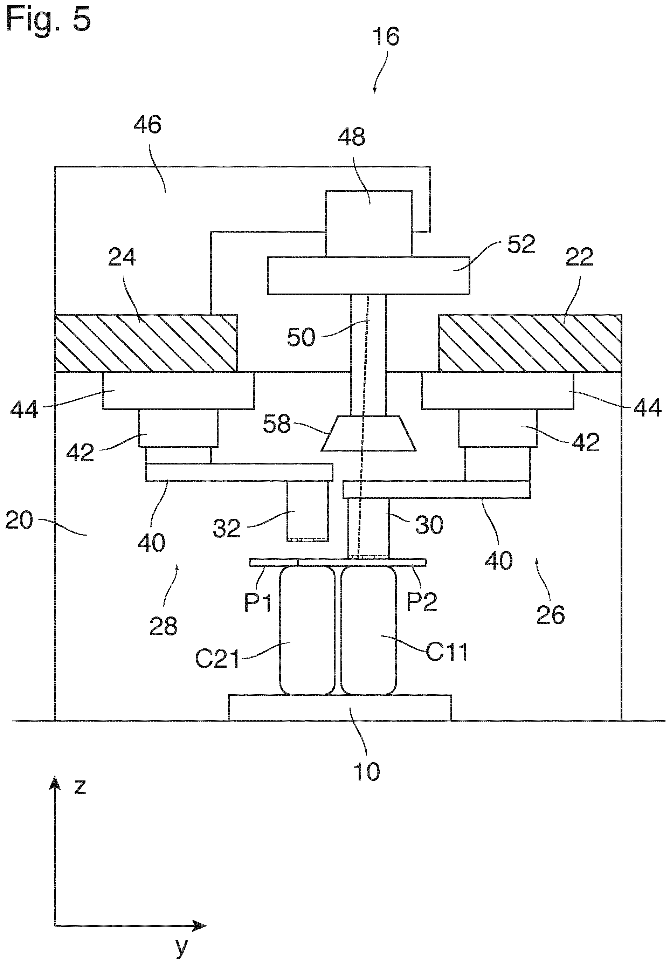

In Fig. 1 sieht man auch eine Reihe von Elektrodenblechen P1 bis P7 ("Werkstücke" im Sinne des Anpruchs 1), die auf den beiden Reihen der Batteriezellen aufliegen und nach einem bestimmten Schema, das später noch näher erläutert werden wird, durch Laserschweißung mit den Plus- und Minuspolen 12, 14 der Batteriezellen verbunden werden sollen. Für die Ausführung dieser Schweißungen ist eine in Fig. 1 gezeigte Schweißvorrichtung 16 vorgesehen, die das Substrat 10 und die Reihen der Zellen C11 - C29 nach Art eines Portals überbaut. Das Portal hat vertikale Stirnwände 18, 20, die beiderseits des Substrats 10 aufragen und an der Oberseite durch zwei Traversen 22, 24 miteinander verbunden sind. In Fig. 1 ist nur die Traverse 22 sichtbar. Die dahinterliegende zweite Traverse 24 ist beispielsweise in der Stirnansicht in Fig. 5 zu sehen.

Wie Fig. 1 zeigt, weist die Schweißvorrichtung 16 außerdem zwei Positioniersysteme, z.B. Roboter 26, 28 auf, die jeweils dazu dienen, einen Spannrahmen 30 bzw. 32 in mehreren Achsen zu manipulieren. Der Roboter 26 ist in einer Richtung x, in der sich die Reihen der Batteriezellen erstrecken, längs der Traverse 22 verfahrbar und ist in der Lage, den Spannrahmen 30 in einer Position zu halten, in der er sich über der ersten Reihe der Zellen C11 bis C19 befindet. Entsprechend ist der Roboter 28 in der Richtung x längs der Traverse 24 verfahrbar und in der Lage, den Spannrahmen 32 in einer Position zu halten, in der er sich über derselben Reihe der Zellen C11 bis C19 befindet.

In der Schnittdarstellung in Fig. 8 ist der Spannrahmen 32 in einer Position über der Zelle C29 gezeigt. Jeder der beiden Spannrahmen 30, 32 hat eine annähernd zylindrische Gestalt mit einem Boden 34, in dem eine zentrale Schweißöffnung 36 und eine periphere Schweißöffnung 38 ausgespart sind.

Wie Fig. 1 zeigt, ist der Spannrahmen 30 an einem Drehantrieb 40 gehalten, der seinerseits an einem z-Achsen-Antrieb 42 gehalten ist, der eine Bewegung des Spannrahmens in einer (vertikalen) Richtung z parallel zu den Achsen der zylindrischen Batteriezellen ermöglicht. Der z-Achsen-Antrieb 42 ist an der Unterseite eines y-Achsen-Antriebs 44 gehalten, der seinerseits in einer Richtung x parallel zu den Reihen der Batteriezellen längs der Traverse 22 verfahrbar ist. Wie Fig. 5 zeigt, ist entsprechend auch der Spannrahmen 32 über einen Drehantrieb 40, einen z-Achsen-Antrieb 42 und einen y-Achsen-Antrieb 44 an der zugehörigen Traverse 24 gehalten und längs dieser verfahrbar. Die y-Achsen-Antriebe 44 erlauben es, die z-Achsen-Antriebe 42 und damit auch die Spannrahmen 30, 32 in einer Richtung y rechtwinklig zu den Reihen der Batteriezellen und rechtwinklig zur (vertikalen) z-Achse zu bewegen. Die z-Achsen-Antriebe 42 ermöglichen eine vertikale Bewegung der Spannrahmen 30, 32 längs der z-Achse. Die Drehantriebe 40 haben jeweils insgesamt eine L-förmige Konfiguration mit einem vertikalen Schenkel und einem horizontalen Schenkel, an dessen freiem Ende sich der Spannrahmen 30 bzw. 32 befindet. Die Drehantriebe 40 können beispielsweise als Riementriebe ausgebildet sein, die in den horizontalen Schenkeln untergebracht sind. Mit Hilfe dieser Drehantriebe 40 sind die zylindrischen Spannrahmen 30, 32 jeweils um ihre Achse drehbar, die parallel zur z-Achse verläuft. Die Roboter 26, 28 erlauben es somit, die Achsen der zylindrischen Spannrahmen 30, 32 jeweils auf die Achse einer Batteriezelle auszurichten und den Spannrahmen dann so zu drehen, dass die Schweißöffnungen 36, 38 eine gewünschte Orientierung annehmen.

Auf der Traverse 24 ist ein Wagen 46 montiert, der kontinuierlich in der Richtung x längs dieser Traverse verfahrbar ist. An einem Ausleger des Wagens 46 ist eine Laserstrahlquelle 48 so gehalten, dass sie sich oberhalb einer Lücke zwischen den beiden Traversen 22, 24 befindet (siehe Fig. 5). Die Laserstrahlquelle 48 ist in bekannter Weise dazu ausgebildet, einen energiereichen Laserstrahl 50 zu erzeugen, diesen Laserstrahl mittels einer Linse 52 auf eine Ebene zu fokussieren, in der die Plus- und Minuspole 12, 14 der Batteriezellen liegen, und diesen Laserstrahl mit Hilfe eines elektronisch gesteuerten Spiegelsystems auf den Plus- oder Minuspol 12, 14 und den darauf aufliegenden Teil einer der Elektrodenbleche P1 bis P7 zu lenken, so dass das betreffende Elektrodenblech und der Batteriepol durch eine Schweißnaht mechanisch und elektrisch miteinander verbunden werden.

In Fig. 1 sind außerdem noch zwei Kameras 54, 56 gezeigt, die in der Richtung x vor und hinter den Robotern 26, 28 angeordnet sind und es erlauben, die Lage der Elektrodenzellen P1 bis P7 und die Lage der Batteriezellen optisch zu erfassen. Durch digitale Bildverarbeitung können dann Steuerdaten für eine präzise Steuerung der Roboter 26, 28 und eine präzise Steuerung des Spiegelsystems der Laserstrahlquelle 48 generiert werden.

In der Darstellung in Fig. 5 wurden die Kameras 54, 56 der Übersichtlichkeit halber fortgelassen. Stattdessen zeigt Fig. 5 Teile eines Absaugsystems oder eines kombinierten Absaug- und Begasungssystems 58, das ebenfalls an dem Wagen 46 gehalten ist und dazu dient, den jeweiligen Schweißort mit einem Schutzgas zu begasen und/oder die beim Schweißprozess entstehenden Schweißgase abzusaugen. Die Teile des Absaug- und Begasungssystems 58 sind in der Richtung x vor und hinter der Laserstrahlquelle 48 angeordnet, so dass sie die Ausbreitung des Laserstrahls 50 zum jeweiligen Schweißpunkt nicht behindern.

In Fig. 1 ist die Schweißvorrichtung 16 in einem Zustand gezeigt, in dem der Spannrahmen 30 auf die Elektrodenbleche P2 und P3 abgesenkt ist, um Teile dieser Elektrodenbleche gegen den Plus- bzw. Minuspol der Zelle C13 zu spannen. Wenn die Elektrodenbleche und die Zelle in dieser Weise eingespannt sind, wird der Laserstrahl 50 durch die Schweißöffnungen 36 und 38 hindurch nacheinander auf den Pluspol und den Minuspol der Zelle C13 gerichtet, um die Batteriepole mit den Elektrodenblechen zu verschweißen.

In einem vorangegangenen Arbeitsschritt hat der Spannrahmen 32 Teile der Elektrodenbleche P1 und P2 gegen die Zelle C12 gespannt, und die Pole dieser Zelle wurden mit den Elektrodenblechen verschweißt. In dem in Fig. 1 gezeigten Stadium wurde der Spannrahmen 32 jedoch mit Hilfe des z-Achsen-Antriebs 42 angehoben und mit Hilfe des y-Achsen-Antriebs 44 in der Richtung senkrecht zur Zeichenebene in Fig. 1 zurückgefahren, so dass er nun in der Richtung x an dem Spannrahmen 30 vorbeibewegt werden kann.

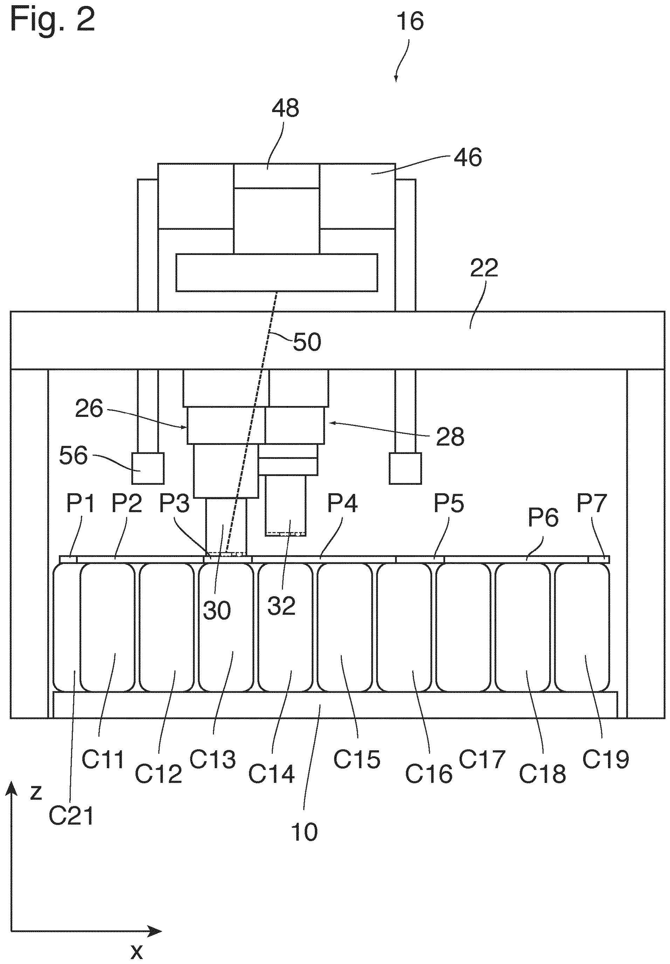

In Fig. 2 hat der Roboter 28 eine Position erreicht, in der er in z-Richtung mit der nächsten Zelle C14 ausgerichtet ist. Der Spannrahmen 30 hält weiterhin die Elektrodenbleche P2 und P3 gegen die Zelle C13 gespannt, und mit Hilfe des Laserstrahls 50 wird der Schweißvorgang fortgesetzt. Der Wagen 46 wurde unterdessen kontinuierlich in der Richtung x weiterbewegt, so dass die Kamera 56 jetzt etwas näher an den Roboter 26 herangerückt ist. Die Relativbewegung des Wagens 46 relativ zu dem Roboter 26 wird während des Schweißvorgangs fortlaufend durch entsprechende Ablenkung des Laserstrahls 50 kompensiert.

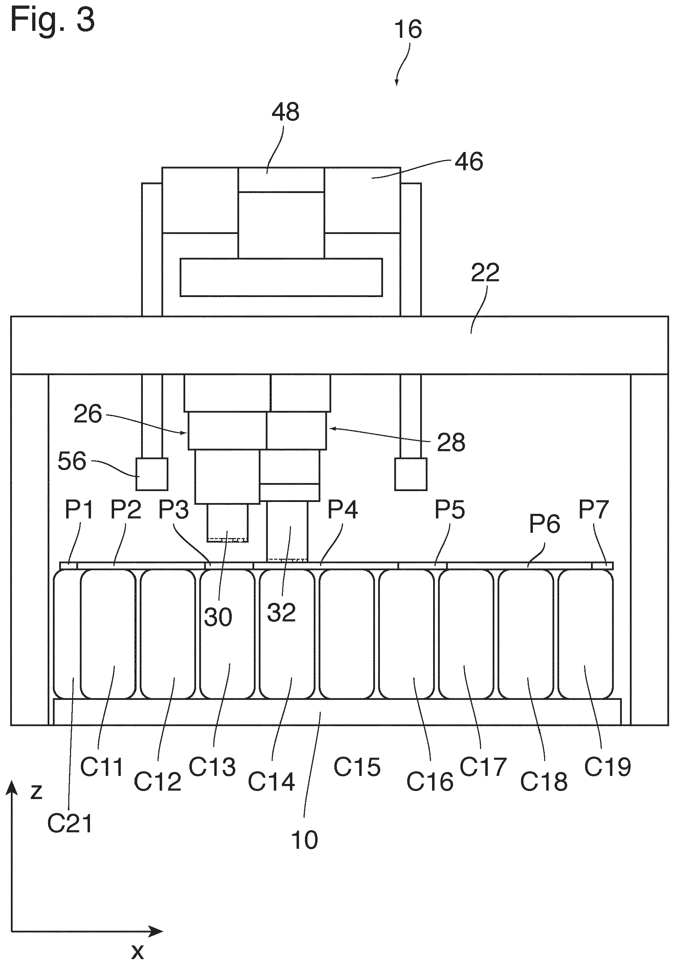

In Fig. 3 ist der Schweißvorgang an der Zelle C13 beendet. Der Spannrahmen 30 wurde angehoben und in der Richtung -y (auf den Betrachter zu) zurückgefahren. Unterdessen wurde der Spannrahmen 32 mit der Achse der Zelle C14 ausgerichtet und auf diese Zelle abgesenkt, so dass nunmehr mit den Schweißvorgängen an dieser Zelle begonnen werden kann.

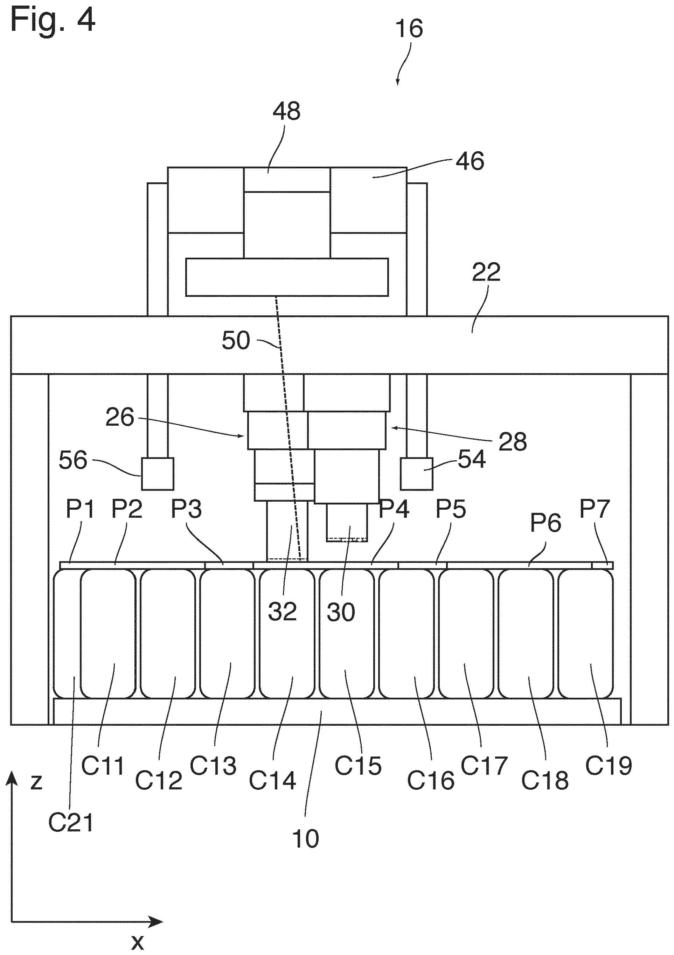

In Fig. 4 hat der Schweißprozess an der Zelle C14 begonnen, und der Spannrahmen 30 wurde in x-Richtung in die Position der Zelle C15 bewegt. Der Wagen 46 hat sich unterdessen kontinuierlich in der Richtung x weiterbewegt, so dass es nicht zu einer Kollision zwischen dem Roboter 28 und der Kamera 54 kommt.

Auf diese Weise werden die Roboter 26 und 28 schrittweise und abwechselnd (im Gegentakt) in der Richtung x längs der Reihen der Batteriezellen weiterbewegt, während der Wagen 46 mit der Laserstrahlquelle 48 kontinuierlich nachgeführt wird. Wenn die letzte Zelle C19 in der ersten Reihe erreicht ist, werden die Schweißvorrichtung 16 und das Substrat 10 so weit in der Richtung y relativ zueinander bewegt, dass die Laserstrahlquelle und die Roboter sich dann über der zweiten Reihe der Batteriezellen C21 bis C29 befinden. Die Roboter 26, 28 und der Wagen 46 bewegen sich dann in der -x-Richtung, um die Schweißungen an den Zellen C29 bis C21 in der zweiten Reihe vorzunehmen. Auch dabei bewegen sich die Roboter 26, 28 wieder schrittweise, während der Wagen 46 kontinuierlich bewegt wird. Die Erfassung der Positionen der Kontaktbleche P1 bis P7 und der Batteriezellen wird in dieser Phase von der Kamera 56 übernommen, die in dieser Bewegungsrichtung vorausläuft. Die nachlaufende Kamera 54 kann dann dazu benutzt werden, ein Bild der fertiggestellten Schweißnähte aufzunehmen, um die Qualität der Schweißnähte zu überprüfen.

In einer abgewandelten Ausführungsform können die Spannrahmen 30, 32 auch mehrteilig ausgebildet sein. Beispielsweise können für die beiden Pole der Batterie zwei unabhängig voneinander bewegbare Teilrahmen vorgesehen sein.

Während in dem hier gezeigten Beispiel jede Reihe der Batteriezellen lediglich neun Zellen aufweist, kann die Anzahl der Zellen je Reihe in der Praxis wesentlich größer sein. Ebenso kann eine wesentlich größere Anzahl von Reihen von Zellen auf dem Substrat 10 angeordnet sein.

Der in Fig. 5 gezeigte Zustand der Schweißvorrichtung 16 entspricht dem Zustand in Fig. 1, wo der Spannrahmen 30 auf die Batteriezelle C13 abgesenkt ist (die allerdings in Fig. 5 durch die Zelle C11 verdeckt ist). Der Spannrahmen 32 ist in -y-Richtung zurückgefahren, damit die aufeinander zu gerichteten horizontalen Ausleger der Drehantriebe 40 sich in der Richtung x aneinander vorbeibewegen können.

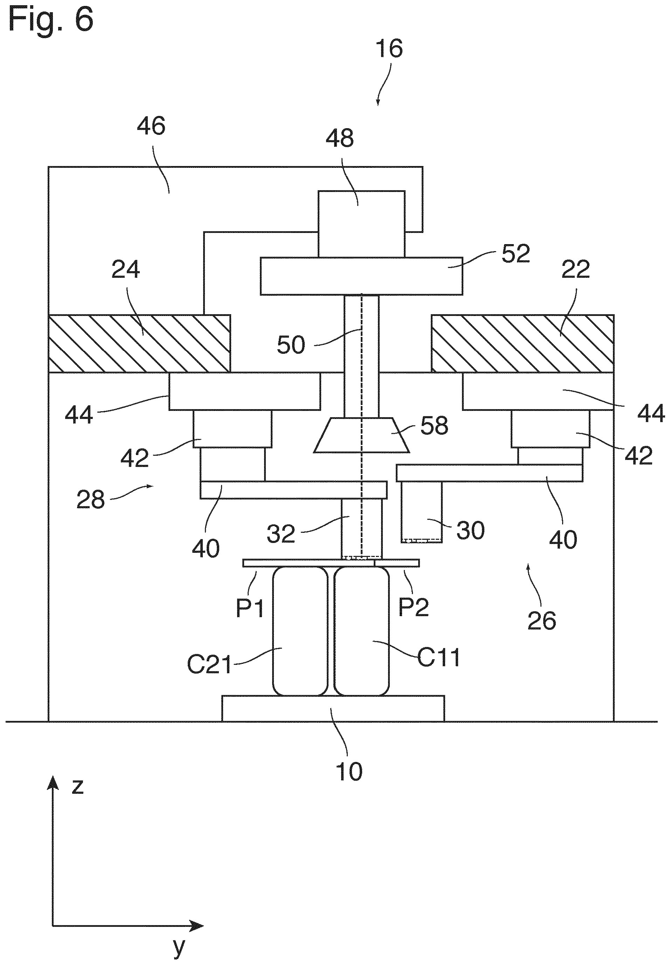

Der Zustand in Fig. 6 entspricht dem Zustand in Fig. 4, wo die Schweißung an der Zelle C14 vorgenommen wird, während die Kontaktbleche P3 und P4 durch den Spannrahmen 32 gehalten werden. Der Roboter 26 hat den Spannrahmen 30 angehoben und in y-Richtung zurückgefahren, damit die Drehantriebe 40 bei der Bewegung in x-Richtung nicht miteinander kollidieren.

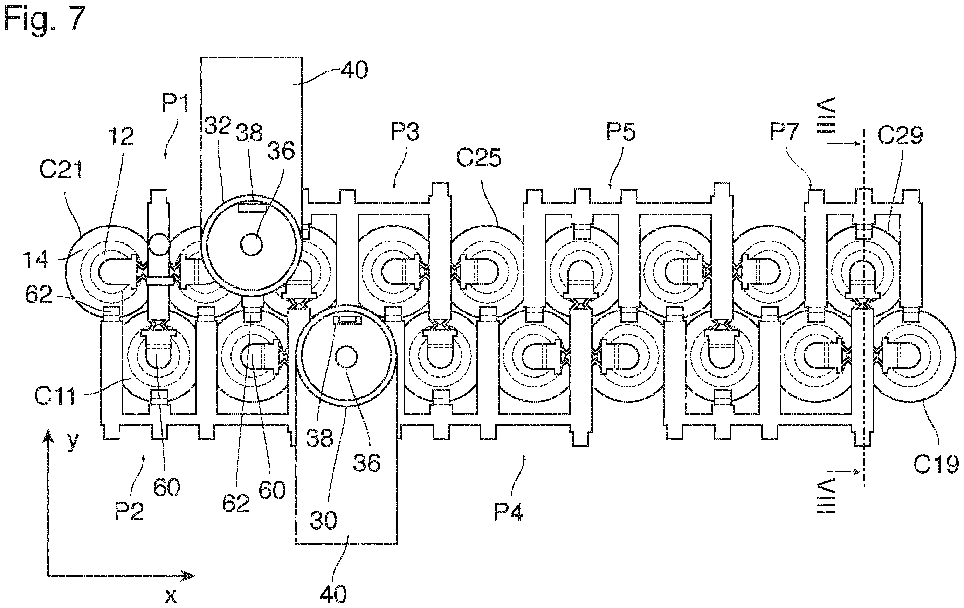

In Fig. 7 ist ein mögliches Kontaktierungsschema der Elektrodenbleche und Batteriezellen gezeigt. In dem hier beschriebenen (vereinfachten) Beispiel werden die Pluspole der Zellen C11, C21 und C22 durch das Elektrodenblech P1 miteinander verbunden. Zu diesem Zweck weist das Elektrodenblech P1 drei gefederte und in z-Richtung abgesetzte Kontakte 60 auf, die mit den Pluspolen 12 der Zellen zu verschweißen sind. Die Minuspole 14 dieser drei Zellen werden durch das Kontaktblech P2 mit den Pluspolen der Zellen C12, C23 und C13 verbunden. Das Kontaktblech P2 weist deshalb gefederte Kontakte 60 für die Pluspole sowie in z-Richtung abgesetzte Kontakte 62 für die Minuspole 14 auf.

Entsprechend verbindet das Kontaktblech P3 die Minuspole dieser Dreiergruppe von Zellen mit den Pluspolen der nächsten Dreiergruppe, die durch die Zellen C24, C14 und C25 gebildet wird. Dieses Schema setzt sich fort bis zum Kontaktblech P6. Das letzte Kontaktblech P7 verbindet die Minuspole der letzten Dreiergruppe der Zellen C18, C29 und C19.

Die insgesamt achtzehn Batteriezellen werden somit zu sechs in Reiche geschalteten Dreiergruppen von Zellen zusammengeschaltet, wobei die drei Zellen jeder Dreiergruppe zueinander parallel geschaltet sind. Auf diese Weise wird ein Batteriemodul gebildet, dessen Plus-Spannungsabgriff das Kontaktblech P1 ist und dessen Minus-Spannungsabgriff das Kontaktblech P7 ist.

In Fig. 8 ist die abgewinkelte Form der Kontakte 60 und 62 der Kontaktbleche P6 und P7 zu erkennen, die den Pluspol 12 und den Minuspol 14 der Zelle C29 kontaktieren. Beim Schweißen dieser Zelle ist der Spannrahmen 32 auf diese Zelle C29 aufgesetzt, so dass er mit seinem Boden 34 die Kontakte 60 und 62 gegen die Batteriepole drückt, während die Schweißöffnungen 36 und 38 den Durchtritt des Laserstrahls auf die Schweißstellen ermöglichen.

In Fig. 7 sind die Spannrahmen 30 und 32 und die zugehörigen Drehantriebe 40 in den gleichen Positionen gezeigt wie in Fig. 1. Der Spannrahmen 30 spannt die Zelle C13 und die zugehörigen Kontaktbleche. Im vorangegangenen Arbeitsschritt wurden die Zelle C12 und die zugehörigen Kontaktbleche mit dem Spannrahmen 32 gespannt, der nun in Y-Richtung zurückgezogen ist. Die Position der peripheren Schweißöffnung 38 des Spannrahmens 32 entspricht der Position des zu der Zelle C12 gehörenden Kontakts 62 des Kontaktbleches P3.

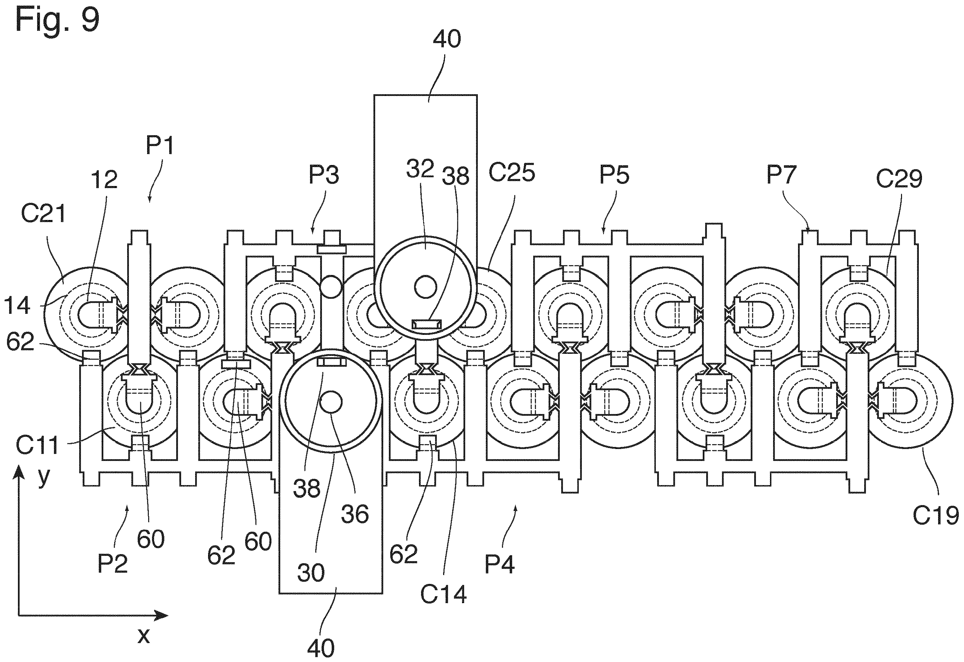

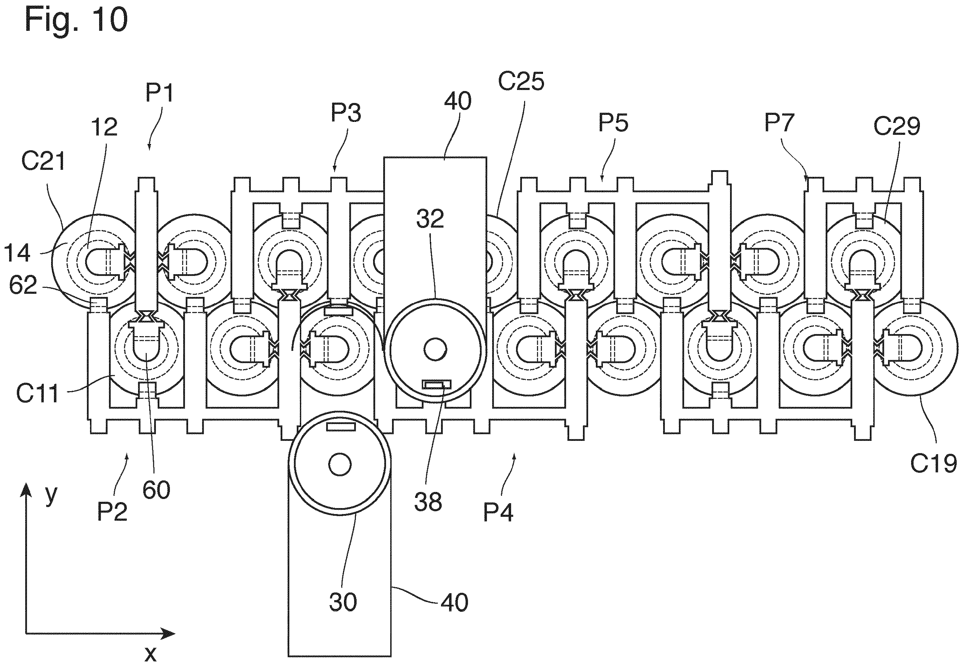

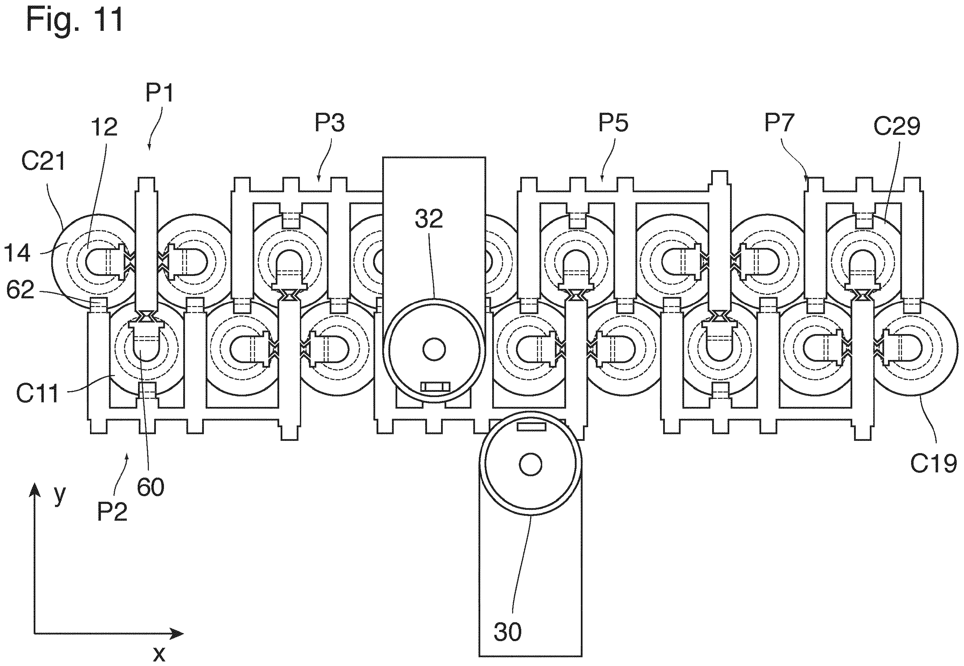

In Fig. 9 hat sich der Spannrahmen 32 um einen Schritt in x-Richtung an dem Spannrahmen 30 vorbei bewegt, so dass er sich nun auf Höhe der Zelle C14 befindet. Mit Hilfe des Drehantriebs 40 wurde der Spannrahmen 32 um 180° um seine Achse gedreht, so dass die periphere Schweißöffnung 38 nun der Position des Kontakts 62 für den Minuspol der Zelle C14 entspricht, sobald die Achse des Spannrahmens 32 mit der Achse dieser Zelle ausgerichtet ist.In Fig. 10 hat diese Ausrichtung stattgefunden, so dass die Schweißöffnung 38 nun mit dem Kontakt fluchtet. Gleichzeitig wurde der Spannrahmen 30 in -y-Richtung zurückgezogen, damit er sich im nächsten Schritt an dem Spannrahmen 32 vorbei in die Position bewegen kann, die in Fig. 11 gezeigt ist. Bei den nachfolgenden Schritten wird der Spannrahmen 32 in jedem Schritt um 180° gedreht, während der Spannrahmen 30 bei diesem Kontaktierungsschema seine Winkelposition beibehalten kann. Es sind jedoch auch Kontaktierungsschemata denkbar, bei denen die Winkelstellungen beider Spannrahmen geändert werden müssen.

## Patentansprüche

1. Verfahren zum Schweißen von Werkstücken, die eine Vielzahl von in mindestens einer Reihe angeordneten Baugruppen (C11-C29) bilden, bei dem die Werkstücke Baugruppe für Baugruppe der Reihe nach mit Hilfe von mindestens zwei schrittweise bewegten, im Wechsel arbeitenden Spannrahmen (30, 32) miteinander verspannt und mittels einer lenkbaren Laserstrahlquelle (48) miteinander verschweißt werden, **dadurch gekennzeichnet, dass** die Laserstrahlquelle (48) synchron mit dem Spannrahmen (30, 32) aber kontinuierlich längs der mindestens einen Reihe der Baugruppen bewegt wird.

2. Verfahren nach Anspruch 1, bei dem die beiden Spannrahmen (30, 32) im überschlagenen Einsatz auf derselben Reihe von Baugruppen (C11-C19) arbeiten.

3. Verfahren nach Anspruch 1 oder 2, bei dem die beiden Spannrahmen (30, 32) jeweils mit Hilfe eines Roboters (26, 28) unabhängig voneinander in mindestens zwei Achsen bewegt werden.

4. Verfahren nach einem der vorstehenden Ansprüche, für zylindrische Baugruppen (C11 - C29) mit nicht rotationssymmetrisch zur Zylinderachse angeordneten Schweißpunkten, bei dem die Spannrahmen (30, 32) an unterschiedliche Orientierungen der Schweißpunkte angepasst werden, indem sie mittels des jeweilgen Roboters (26, 28) um eine zu der Zylinderachse der Baugruppe koaxiale Achse (z) gedreht werden.

5. Verfahren nach Anspruch 4, bei dem die Baugruppen (C11-C29) Batteriezellen sind und die Positionen der Schweißpunkte die Positionen von Kontakten (60, 62) von Kontaktblechen (P1 - P7) sind, die mit den Plus- und Minuspolen (12, 14) der Batteriezellen zu verschweißen sind.

6. Verfahren nach einem der vorstehenden Ansprüche, bei die Bewegungen der Spannrahmen (30, 32) in einer Richtung (z) rechtwinklig zu der mindestens einen Reihe der Baugruppen derart kraftabhängig geregelt werden, dass die zu verschweißenden Werkstücke mit einstellbarer Anpresskraft gegeneinander gespannt werden.

7. Verfahren nach Anspruch 6, bei dem die Positionen der Werkstücke in der zu der Reihe der Baugruppen senkrechten Richtung jeweils vor Ausführung der Schweißung überprüft werden, indem der von dem Spannrahmen (30, 32) in dieser Richtung zurückgelegte Weg gemessen wird.

8. Verfahren nach einem der vorstehenden Ansprüche, bei dem die Positionen der Werkstücke vor jeder Schweißung mit einer digitalen Kamera erfasst werden und die nötigen Bewegungen der Spannrahmen (30, 32) und die nötigen Auslenkungen des Laserstrahls (50) der Laserstrahlquelle (48) durch digitale Bildauswertung bestimmt werden.

9. Verfahren nach Anspruch 8, bei dem jeweils nach einer Anzahl von Schweißungen die Qualität der Schweißnähte mittels einer digitalen Kamera (56) und mittels digitaler Bildauswertung überprüft wird.

10. Verfahren nach einem der vorstehenden Ansprüche, bei dem eine Absaug- und/oder Begasungsvorrichtung (58) gemeinsam mit der Laserstrahlquelle (48) kontinuierlich in der Richtung (x) parallel zu der mindestens einen Reihe der Baugruppen (C11-C29) bewegt wird.

11. Schweißvorrichtung mit einer Laserstrahlquelle (48) und zwei Spannrahmen (32, 36) zum Spannen von Werkstücken, und mit Antriebseinrichtungen zum Bewegen der Laserstrahlquelle (48) und der Spannrahmen (30, 32), **dadurch gekennzeichnet, dass** die Antriebseinrichtungen dazu konfiguriert sind, das Verfahren nach einem der vorstehenden Ansprüche auszuführen.
